# EUROPEAN PATENT SPECIFICATION

(11) **EP 3 256 560 B1**
(45) Date of publication and mention of the grant of the patent: **26.09.2018**
(21) Application number: 16704153.2
(22) Date of filing: 04.02.2016
(51) Int. Cl.: C11D 3/12, C11D 3/16, C11D 3/37, C11D 3/43, C11D 7/20, C11D 7/50, C09D 5/00, C09D 7/61, C09D 183/04, C09D 183/06

(54) **HARD SURFACE TREATMENT COMPOSITION**
BEHANDLUNGSMITTEL FÜR HARTE OBERFLÄCHEN
COMPOSITION DE TRAITEMENT DE SURFACE DURE

(30) Priority: 10.02.2015 EP 15154490
(43) Date of publication of application: 20.12.2017
(73) Proprietor: Unilever N.V., 3013 AL Rotterdam (NL); Unilever PLC, London, Greater London EC4Y 0DY (GB)
(72) Inventor: BHATTACHARYA, Arpita, Whitefield Bangalore 560 066 (IN); MEDEPALLI, Srilaxmi, Venkata, Whitefield Bangalore 560 066 (IN); NAIR, Rohini, Sukumaran, Whitefield Bangalore 560 066 (IN); PANCHANATHAN, Anandh, Whitefield Bangalore 560 066 (IN)
(74) Representative: Corsten, Michael Allan
(86) International application number: PCT/EP2016/052380
(87) International publication number: WO 2016/128288

(56) References cited:
- EP-A1- 0 143 541
- US-A1- 2007 299 177
- DATABASE WPI Week 201205 Thomson Scientific, London, GB; AN 2012-A29339 XP002742912, & WO 2012/002453 A1 (SUNSTAR ENG INC) 5 January 2012 (2012-01-05) cited in the application

## Description

### Field of the invention

The present invention is in the field of hard surface treatment compositions; and in particular relates to hard surface treatment compositions to render a substrate hydrophobic and also repellent to stains and soils.

### Background of the invention

Stains and soils run the gamut from food spills to household substances and can be of different types; mainly aqueous, oily, particulate and bleachable. They are something that people try to avoid, yet they are unavoidable. Nonetheless, people still prefer to have lesser stains/soils or no stains/soils at all. In fact, people prefer to avoid stains not just on clothes but in general in kitchens, bathrooms and also on various household surfaces.

Stains and soils have a tendency to stick to hard surfaces leaving them "dirty". Such an appearance on surfaces is not appreciated by present day consumers. It is therefore thought that by making said surfaces hydrophobic, these stain/soils can be prevented from adhering onto the surfaces, enabling easy removal from the surface.

WO2012002453 (WPI/Thomson), discloses a floor coating composition comprising a silicon atom having average hydrocarbon group of 0.9 - 1.1/atom, and polyorganosiloxane resin having hydroxyl group of 2/molecule, where the hydroxyl group is coupled with the silicon atom. It discloses a room temperature-curable floor coating composition which has excellent ability to adsorb micropowder dust, high resistance against slippage and excellent handling properties.

US2007-0299177 discloses an aqueous-based hydrophilic coating composition and method for adding shine and gloss to hard surfaces. This documents discloses a concentrated, hydrophilic, hard surface coating composition comprising a hydroxyl functional compound selected from the group consisting of: an alcohol, a diol, a polyol, glycerin, a carboxyl functional polymer, a carboxyl functional copolymer and any combinations thereof; an amine functional silane; the balance is water; and wherein the ratio of the hydroxyl functional compound to amine functional silane is about 1: 1 to about 4:1. The composition may further comprise hydrophilic colloidal silica. However, there is no mention of polydimethylsiloxane having a viscosity between 25 to 500 cSt.

EP 0143541 discloses a method for producing aqueous silicone emulsion compositions which cure at room temperature by the removal of water to form elastomeric coatings or films with superior surface gloss, good adhesion to substrates, and rustproofness. This document discloses preparation of an emulsion containing PDMS having at least two hydroxyl groups, colloidal silica or alkali metal silicate, curing catalyst, emulsifier, amino silane and water.

JP58-069250 discloses an aqueous silicone emulsion composition which exhibits good stability upon storage, is able to be easily cured at room temperature upon removal of water therefrom so as to change to an elastomer having excellent rubber property and has good adhesive property to various base materials comprising: an aqueous silicone emulsion which comprises organopolysiloxane having at least two hydroxyl groups binding to silicon atom in a molecule, anionic emulsifier and water; a uniform dispersion which comprises amine-functional silane or a partially hydrolyzed product thereof and colloidal silica; and a catalyst for curing.

It is therefore an object of the present invention to prevent soiling of hard surfaces.

It is another object of the present invention to provide a composition for rendering a surface hydrophobic.

It is yet another object of the present invention to provide a composition that forms a protective layer on the hard surface.

Surprisingly, it has been found that a combination of silica, an aminosilane and a polydimethylsiloxane having a viscosity between 25 to 500 cSt (25°C and 4s⁻¹) renders a surface hydrophobic by forming a protective layer over the hard surface and preventing soiling of the surface.

### Summary of the invention

Accordingly, in a first aspect, the present invention provides a hard surface treatment composition comprising 1 to 4% by weight of a silica; 5 to 50% by weight of a water miscible solvent; 0.3 to 0.9% by weight of an amine-functional silane of the formula RSi(OR')₃; wherein, R is an alkyl chain having 3 to 6 carbon atoms with one amine groups; R' is H or an alkyl chain having 1 to 5 carbon atoms; 0.2 to 4.5% by weight of a polydimethylsiloxane having a viscosity between 25 to 500 cSt (25°C and 4s⁻¹) wherein the polydimethylsiloxane has a functional group selected from hydrogen, hydroxyl and epoxy group;; and water.

In a second aspect, the invention provides a method for rendering a surface hydrophobic comprising the steps in sequence of applying the composition according to the invention onto a surface; and allowing the surface to dry.

In a third aspect, the invention provides use of the composition according to the invention for rendering a surface hydrophobic.

In the context of the present invention, the reference to "hard surface" typically means kitchen tops, kitchen floors, sinks and platforms, floors and bathrooms.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise.

Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

In a first aspect, the invention relates to a hard surface treatment composition comprising silica, an amine-functional silane, polydimethylsiloxane and water.

### Silica

The hard surface treatment composition of the present invention comprises silica. The silica used in the present invention may be hydrophilic silica or an hydrophobically modified silica.

Hydrophilic silica suitable for use in the present invention may be selected from colloidal silica, precipitated silica, fumed or pyrogenic silica and crystalline silica.

Examples of suitable hydrophilic silica include fumed silica (Aerosil 90, 130,150 to 380) and precipitated silica (MFIL series).

Hydrophobically modified silica is selected from silica modified with a silane or a cationic surfactant; more preferred being modification with a silane. Examples of suitable hydrophobically modified silica include Aerosil R972.

The average primary particle size of silica is between 7nm and 20nm and the specific surface area varied from 90 ± 15 to 380 ± 30.

Silica is present in the composition in a concentration of 1 to 4%, preferably at least 1.5%, more preferably at least 2%, still more preferably at least 2.5% but typically not more than 3.5% or preferably not more than 3% by weight of the composition.

### Water miscible solvent

To achieve hydrophobicity in less than 3 hours, the composition comprises a water miscible solvent.

Preferred water miscible solvents are alcohols with low chain lengths (1-3), ketones and glycol ethers.

The most preferred solvents include isopropyl alcohol, acetone, Dowanol PnP and Dowanol DPMA.

Water miscible solvent is present in the composition in a concentration of 5 to 50%, preferably at least 10%, more preferably at least 15%, still more preferably at least 20% but typically not more than 45%, preferably not more than 40%, more preferably not more than 35%, still more preferably not more than 30%by weight of the total composition.

### Amine-functional silane

The hard surface treatment composition of the present invention comprises an amine-functional silane of the formula:

RSi(OR')₃

wherein
- R is an alkyl chain having 3 to 6 carbon atoms with one amine groups, preferably an alkyl chain having 3 carbon atoms; the alkyl chain may further be linear or branched.
- R' is H or an alkyl chain having 1 to 5 carbon atoms, preferably 1 to 4 carbon atoms, more preferably 1 to 3 carbon atoms; the alkyl chain may further be linear or branched.

The preferred amine-functional silanes are (3-aminopropyl)triethoxysilane and 3-aminopropyl(diethoxy)methylsilane.

Amine-functional silane is present in the composition in a concentration of 0.3 to 0.9%, preferably at least 0.4%, more preferably at least 0.5% but typically not more than 0.8%, preferably not more than 0.7%, more preferably not more than 0.6% by weight of the composition.

### Polydimethylsiloxane

The hard surface treatment composition of the present invention essentially comprises polydimethylsiloxane. Polydimethylsiloxane of the present invention have a viscosity between 25 to 500 cSt (25°C and 4s⁻¹), more preferably between 25 to 200 cSt when measured with a TA instrument rheometer AR-1000, with a cone and plate set-up, acrylic/steel 4 cm diameter, 2° angle, truncation gap 58 micron, in steady flow operation. (1 cSt = 1 mPa.s)

Polydimethylsiloxane of the present invention have a functional group selected from hydrogen, hydroxyl or epoxy group.

Non-limiting examples of polydimethylsiloxane with hydrogen-functional group includes MH 1107 (Dow Corning), SS RH-100 (Supreme silicones).

Non-limiting examples of polydimethylsiloxane with hydroxyl-functional group includes polydimethyl siloxane hydroxyl terminated having a viscosity of 25 to 500 cSt (25°C and 4s⁻¹).

Non-limiting examples of polydimethylsiloxane with epoxy-functional group includes X22163A (Shinetsu Chemical Industry).

The preferred polydimethylsiloxanes are polydimethyl siloxane hydroxyl terminated having a viscosity of 25 to 500 cSt (25°C and 4s⁻¹).

Polydimethylsiloxane is present in the composition in a concentration of 0.2 to 4.5%, preferably not less than 0.5%, more preferably not less than 1%, still more preferably not less than 1.5% but typically not more than 4%, preferably not more than 3.5%, more preferably not more than 3%, still more preferably not more than 2.5% or even more preferably not more than 2% by weight of the composition.

### Polydimethylsiloxane to silica ratio

Polydimethylsiloxane and silica is present in the composition in a ratio of 0.2:1 to 1:1, preferably between 0.25:1 to 1:1, more preferably between 0.4:1 to 1:1, still more preferably between 0.6:1 to 1:1.

### Water

The hard surface treatment composition of the present invention comprises 45 to 90% by weight of water, preferably at least 60%, more preferably at least 70% but typically not more than 85%, preferably not more than 80%, more preferably not more than 75% by weight of the composition.

### pH

The pH of the composition is between pH 8 and 12, preferably between 10 and 11.

### Further optional ingredients

Common cleaner and aesthetic additives such as perfumery molecules including encapsulates, fluorescers and optical brighteners, antimicrobial actives such as essential oils and cationic amino surfactants, anti insect actives such as DEET and picaridin, fluoropolymers/ flurosurfactants, viscosity modifiers such as gum resins, polysaccharides, fatty alcohols, polyols (such as polyvinyl alcohol, glycerol), ingredients that give a delayed release of perfumes, room freshening agents and anti stick agents, viscosifying agents such as gums (Xanthum, guar, kelzan), polymers (carbopol, starch or its derivatives, polysaccharides), stabilizers such as polyols (polyvinyl alcohol, polyethylene glycols or copolymers), fluorosilanes, flouro surfactants, flouro siloxanes or fluoro polymers for anti oil sticking, oil repellence and easy oil removal properties, chelating agents such as hydroxamate, EDTA, NTA, DTPA type metal chelators, citrate and organic crystal habit modifying agents, surface care actives such as silicone emulsion, silicone resins, surface curing agents and silicone elastomers.

### Method for rendering a surface hydrophobic

In a second aspect, the invention relates to a method for rendering a surface hydrophobic comprising the steps in sequence of applying the composition according to the invention onto a surface and allowing the surface to dry.

Optionally the surface may be wiped after the application of the composition and before it is allowed to dry. The composition may be applied by any known ways such as by using a mop, wipes, spray, including spray guns, atomizers, or other direct application. The applied composition may be optionally wiped using a mop, wipes, paper, cloth etc.

It is preferred that the surface is not rinsed after the application of the composition and before drying.

### Use of the composition

In a third aspect, the invention relates to the use of the composition according to the invention for rendering a surface hydrophobic.

### Product format

The composition may be packaged in the form of any commercially available bottle for storing the liquid or in the form of a kit comprising the concentrated liquid along with instructions for it use.

The bottle containing the liquid can be of different sizes and shapes to accommodate different volumes of the liquid; preferably between 0.25 and 2 L, more preferably between 0.25 and 1.5 L or even between 0.25 and 1 L. The bottle is preferably provided with a dispenser, which enables the consumer an easier mode of dispersion of the liquid. Spray or pump-dispensers may be used. However, a trigger spray dispenser is the most preferred.

A kit comprising the concentrated liquid that may be diluted with water as per the instructions provided for achieving the desired concentrations is also included in the scope of this invention. The liquid is typically concentrated by reducing the amount of water in the composition. A concentrated composition is preferably concentrated to a factor between 1.5 and 25, more preferably between 1.5 and 10, still more preferably between 1.5 and 5.

The kit comprising the concentrated liquid may also be used to refill the commercially available bottle.

The invention will now be illustrated by means of the following non-limiting examples.

### Examples

### Materials

| | **Chemical /Material** | **Grade** | **Manufacturer/ Supplier** |
|---|---|---|---|
| Hydrophobic silica | Fumed silica | Commercial grade | Evonik |
| | | aerosil R972 | |
| Hydrophilic silica | Fumed silica 0.2 to 0.3um average aggregate size | Lab grade | Sigma Aldrich |
| PDMS | Hydroxyl functional polydimethyl siloxane | Lab grade | Sigma Aldrich |
| | Epoxy functional polydimethyl siloxane | Commercial grade | Shinetsu Chemical Industry |
| | Hydrogen functional polydimethyl siloxane | Commercial grade | Dow corning |
| Amine-functional silane | (3-Aminopropyl) triethoxysilane | Commercial grade | Supreme Silicone |
| | | SS AMS1106 | |
| | [3-(2-Aminoethylamino) propyl]trimethoxysilane | Lab grade | Sigma Aldrich |
| | 3-Aminopropyl(diethoxy) methylsilane | Lab grade | Sigma Aldrich |
| Solvent | 2 propanol (Isopropyl alcohol) | | Merck |
| Water | De ionized water | | |

### Preparing the compositions:

10g of Isopropyl alcohol and 0.4g of hydroxyl terminated PDMS were taken in a 50 ml tarson centrifuge tube and mixed in a vortex mixer (Spinix vortex shaker from tarson) till the PDMS dissolved completely. 1.6g of silica was added and mixed until the mix was homogeneous and 0.4 g of (3-Aminopropyl) triethoxysilane was added and stirred till the mixture transformed into a gel. To this, 30 ml of water was added and vortexed and the whole mixture was then added to remaining water under stirred conditions in 1MLH remi magnetic stirrer. Stirring was done for 5 minutes.

### Treatment procedure:

The tile was kept at fixed angle (65°) and the formulations were sprayed and allowed to dry at a temperature of 22°C.

### Test for Hydrophobicity:

Hydrophobicity was confirmed on the basis of sliding angle measurements. Sliding angle in accordance with the present invention is the angle at which water droplet rolls off the surface. The tile was kept at an angle of 5° and 5 to 10ul of water droplet was placed at different places on the tile to observe the water behavior. If the drop of water was sliding at 5° then the surface was considered to have good hydrophobicity. A composition providing sliding of water at a sliding angle of 5° was considered to have a contact angle equal to or greater than 120°.

Contact angle in accordance with the present invention is the angle at which the liquid interface meets a solid surface. The contact angle determines the hydrophobicity imparted to a surface. Contact angle above 120° is considered to be good.

### Test for film strength

During the sliding angle measurements, if the film formed on surface remained intact while placing the water droplet, then the film strength was considered to be good and if the film was not intact, then film strength was considered to be poor.

### Test for stability

The stability of the formulation was checked visually. Homogenous formulations were considered to be stable.

### Example 1: Effect of concentration of silica on hydrophobicity, film strength and stability

In this example, different concentrations of silica are compared. Ex 1 to Ex 5 are example compositions according to the present invention which are compared to Comp A to D (comparative examples) comprising silica in a concentration outside the scope of the present invention.

| *Set* | *Silica* wt%* | *Solvent wt%* | *PDMS wt%* | *Amine- functional silane wt%* | *Water wt%* | *Hydro phobi city [sliding angle of 5° on tile]* | *Film Strength* | *Time required to achieve hydropho bicity (hour)* | *Stabi lity* |
|---|---|---|---|---|---|---|---|---|---|
| *Comp A* | 0.1 | 10 | 0.4 | 0.4 | 89.1 | No | Yes | >3 hours | Yes |
| *Comp B* | 0.5 | 10 | 0.4 | 0.4 | 88.7 | No | Yes | >3 hours | Yes |
| *Ex 1* | 1 | 10 | 0.4 | 0.4 | 88.2 | Yes | Yes | <3 hours | Yes |
| *Ex 2* | 1.6 | 10 | 0.4 | 0.4 | 87.6 | Yes | Yes | <3 hours | Yes |
| *Ex 3* | 2 | 10 | 0.4 | 0.4 | 87.2 | Yes | Yes | <3 hours | Yes |
| *Ex 4* | 3 | 10 | 0.4 | 0.4 | 86.2 | Yes | Yes | <3 hours | Yes |
| *Ex 5* | 4 | 10 | 0.4 | 0.4 | 85.2 | Yes | Yes | <3 hours | Yes |
| *Comp C* | 5 | 10 | 0.4 | 0.4 | 84.2 | Yes | No | >3 hours | Yes |
| *Comp D* | 6 | 10 | 0.4 | 0.4 | 83.2 | No | No | >3 hours | Yes |

| | | | | | | | | | |
|---|---|---|---|---|---|---|---|---|---|
| *Hydrophilic | | | | | | | | | |

Variation in the concentrations of silica show that good hydrophobicity which is achieved in less than 3 hours, film strength and stability are obtained only at a silica concentration according to the invention.

### Example 2: Effect of concentration of polydimethylsiloxane on hydrophobicity, film strength and stability

In this example, different concentrations of polydimethylsiloxane are compared. Ex 6 to Ex 14 are example compositions according to the present invention which are compared to Comp E and F (comparative examples) comprising polydimethylsiloxane in a concentration outside the scope of the present invention.

| *Set* | *Sili ca* wt%* | *Sol vent wt%* | *PDMS wt%* | *Amine func tional silane wt%* | *Water wt%* | *Hydro phobi city [sliding angle of 5° on tile]* | *Film Strength* | *Time required to achieve hydro phobicity (hour)* | *Stabi lity* |
|---|---|---|---|---|---|---|---|---|---|
| *Comp E* | 1.6 | 10 | 0.1 | 0.4 | 87.9 | No | Yes | >3 hours | Yes |
| *Ex 6* | 1.6 | 10 | 0.2 | 0.4 | 87.8 | Yes | Yes | <3 hours | Yes |
| *Ex 7* | 1.6 | 10 | 0.4 | 0.4 | 87.6 | Yes | Yes | <3 hours | Yes |
| *Ex 8* | 1.6 | 10 | 0.6 | 0.4 | 87.4 | Yes | Yes | <3 hours | Yes |
| *Ex 9* | 1.6 | 10 | 0.8 | 0.4 | 87.2 | Yes | Yes | <3 hours | Yes |
| *Ex 10* | 1.6 | 10 | 1 | 0.4 | 87 | Yes | Yes | <3 hours | Yes |
| *Ex 11* | 1.6 | 10 | 1.5 | 0.4 | 86.5 | Yes | Yes | <3 hours | Yes |
| *Ex 12* | 1.6 | 10 | 2 | 0.4 | 86 | Yes | Yes | <3 hours | Yes |
| *Ex 13* | 1.6 | 10 | 3 | 0.4 | 85 | Yes | Yes | <3 hours | Yes |
| *Ex 14* | 1.6 | 10 | 4 | 0.4 | 84 | Yes | Yes | <3 hours | Yes |
| *Comp F* | 1.6 | 10 | 5 | 0.4 | 83 | No | No | >3 hours | No |

| | | | | | | | | | |
|---|---|---|---|---|---|---|---|---|---|
| *Hydrophilic | | | | | | | | | |

The above table shows that polydimethylsiloxane in concentrations according to the invention provides a composition which is stable and renders to a surface a protective layer with good film strength and hydrophobicity which is achieved in less than 3 hours.

### Example 3: Effect of the type of polydimethylsiloxane on hydrophobicity, film strength and stability

In this example, different types of polydimethylsiloxanes are compared. Ex 15 to Ex 17 are example compositions according to the invention comprising polydimethylsiloxanes with a functional group and Comp G is a comparative example comprising polydimethylsiloxane without a functional group.

| *Set* | *Sili ca* wt %* | *Sol vent wt%* | *PDMS* | | *Amine- functional silane wt%* | *Water wt%* | *Hydro phobi city [sliding angle of 5° on tile]* | *Film Strength* | *Time required to achieve hydro phobi city (hour)* | *Stabi lity* |
|---|---|---|---|---|---|---|---|---|---|---|
| | | | *Type (Functional group)* | *wt%* | | | | | | |
| *Ex 15* | 1.6 | 10 | OH | 0.4 | 0.4 | 87.6 | Yes | Yes | <3 hours | Yes |
| *Ex 16* | 1.6 | 10 | H | 0.4 | 0.4 | 87.6 | Yes | Yes | <3 hours | Yes |
| *Ex 17* | 1.6 | 10 | Epoxy | 0.4 | 0.4 | 87.6 | Yes | Yes | <3 hours | Yes |
| *Comp G* | 1.6 | 10 | No functional group | 0.4 | 0.4 | 87.6 | No | Yes | >3 hours | Yes |

| | | | | | | | | | | |
|---|---|---|---|---|---|---|---|---|---|---|
| *Hydrophilic | | | | | | | | | | |

The above table shows that when polydimethylsiloxane with no functional group (hydrogen, hydroxyl or epoxy) is used, the protective layer formed does not have a good hydrophobicity and the same is also not achieved in 3 hours.

### Example 4: Effect of the viscosity of polydimethylsiloxane on hydrophobicity, film strength and stability

This example demonstrates the effect of the viscosity of polydimethylsiloxane. Example compositions according to the invention (Ex 18 to Ex 20) are compared to comparative examples comprising polydimethylsiloxane having a viscosity outside the scope of the present invention (Comp H and Comp I).

| *Set* | *Sili ca* wt%* | *Sol vent wt%* | *PDMS (Hydroxyl functional polydimethyl siloxane)* | | *Amine -func tional silane wt%* | *Water wt%* | *Hydro pho bicity [sliding angle of 5° on tile]* | *Film Strength* | *Time required to achieve hydro phobicity (hour)* | *Stabi lity* |
|---|---|---|---|---|---|---|---|---|---|---|
| | | | *Visco sity, cSt* | *wt* % | | | | | | |
| *Ex 18* | 1.6 | 10 | 25 | 0.4 | 0.4 | 87.6 | Yes | Yes | <3 hours | Yes |
| *Ex 19* | 1.6 | 10 | 65 | 0.4 | 0.4 | 87.6 | Yes | Yes | <3 hours | Yes |
| *Ex 20* | 1.6 | 10 | 90-150 | 0.4 | 0.4 | 87.6 | Yes | Yes | <3 hours | Yes |
| *Comp H* | 1.6 | 10 | 750 | 0.4 | 0.4 | 87.6 | No | Yes | >3 hours | Yes |
| *Comp I* | 1.6 | 10 | 1800-2200 | 0.4 | 0.4 | 87.6 | No | Yes | >3 hours | Yes |

| | | | | | | | | | | |
|---|---|---|---|---|---|---|---|---|---|---|
| *Hydrophilic | | | | | | | | | | |

It is apparent from the above table that a stable composition which provides a protective layer with good film strength and hydrophobicty is obtained only at a polydimethylsiloxane viscosity according to the invention.

### Example 5: Effect of concentration of amine-functional silane on hydrophobicity, film strength and stability

In this example, different concentrations of amine-functional silane according to the invention (Ex 21 to Ex 23) are compared with comparative compositions having amine-functional silane in a concentration beyond the claimed ranges (Comp J to Comp M).

| *Set* | *Sili ca* wt%* | *Sol vent wt%* | *PDMS wt%* | *Amine- func tional silane wt%* | *Water wt%* | *Hydro phobicity [sliding angle of 5° on tile]* | *Film Strength* | *Time required to achieve hydropho bicity (hour)* | *Stability* |
|---|---|---|---|---|---|---|---|---|---|
| *Comp J* | 1.6 | 10 | 0.4 | 0.1 | 87.9 | No | Yes | >3 hours | Yes |
| *Comp K* | 1.6 | 10 | 0.4 | 0.2 | 87.8 | No | Yes | >3 hours | Yes |
| *Ex 21* | 1.6 | 10 | 0.4 | 0.4 | 87.6 | Yes | Yes | <3 hours | Yes |
| *Ex 22* | 1.6 | 10 | 0.4 | 0.6 | 87.4 | Yes | Yes | <3 hours | Yes |
| *Ex 23* | 1.6 | 10 | 0.4 | 0.8 | 87.2 | Yes | Yes | <3 hours | Yes |
| *Comp L* | 1.6 | 10 | 0.4 | 1 | 87 | No | Yes | >3 hours | Yes |
| *Comp M* | 1.6 | 10 | 0.4 | 2 | 86 | No | Yes | >3 hours | Yes |

| | | | | | | | | | |
|---|---|---|---|---|---|---|---|---|---|
| *Hydrophilic | | | | | | | | | |

It is inferred from the results of the above table that good hydrophobicity which is achieved in less than 3 hours, film strength and stability are obtained at an amine-functional silane concentration according to the invention.

### Example 6: Effect of the type of amine-functional silane on hydrophobicity, film strength and stability

This example compares the different types of amine-functional silanes according to the invenition (Ex 24 and Ex 25) with amine-functional silanes outside the scope of the invention (Comp N).

| *Set* | *Sili ca* wt %* | *Sol vent wt%* | *PDMS wt%* | *Amine-functional silane* | | *Water wt%* | *Hydro pho bicity [sliding angle of 5° on tile]* | *Film Strength* | *Time requi red to achie ve hy dro phobi city (hour)* | *Stabi lity* |
|---|---|---|---|---|---|---|---|---|---|---|
| | | | | *Type* | *wt%* | | | | | |
| *Ex 24* | 1.6 | 10 | 0.4 | (3-Aminopropyl) tri-ethoxysilane | 0.4 | 87.6 | Yes | Yes | <3 hours | Yes |
| *Com p N* | 1.6 | 10 | 0.4 | [3-(2-Aminoeth ylamino) propyl]-trimethoxy silane | 0.4 | 87.6 | No | Yes | >3 hours | Yes |
| *Ex 25* | 1.6 | 10 | 0.4 | 3-Aminopro pyl-(diethoxy) methylsila ne | 0.4 | 87.6 | Yes | Yes | <3 hours | Yes |

| | | | | | | | | | | |
|---|---|---|---|---|---|---|---|---|---|---|
| *Hydrophilic | | | | | | | | | | |

The above table shows that the desired effects of the invention are seen only with compositions comprising the amine-functional silane according to the invention.

### Example 7: Effect of concentration of water miscible solvent on hydrophobicity, film strength and stability

In this example, example compositions (Ex 26 to Ex 29) comprising the water miscible solvent at a concentration according to the invention are compared with comparative examples comprising the water miscible solvent outside the scope of the present invention (Comp O and Comp P).

| *Set* | *Sili ca* wt%* | *Sol vent wt%* | *PDMS wt%* | *Amine silane wt%* | *Water wt%* | *Hydropho bicity [sliding angle of 5° on tile]* | *Film Strength* | *Time re quired to achieve hydropho bicity (hour)* | *Stability* |
|---|---|---|---|---|---|---|---|---|---|
| *Comp O* | 1.6 | 0 | 0.4 | 0.4 | 97.6 | Yes | Yes | >3 hours | Yes |
| *Comp P* | 1.6 | 2.5 | 0.4 | 0.4 | 95.1 | Yes | Yes | >3 hours | Yes |
| *Ex 26* | 1.6 | 5 | 0.4 | 0.4 | 92.6 | Yes | Yes | <3 hours | Yes |
| *Ex 27* | 1.6 | 10 | 0.4 | 0.4 | 87.6 | Yes | Yes | <3 hours | Yes |
| *Ex 28* | 1.6 | 50 | 0.4 | 0.4 | 47.6 | Yes | Yes | <3 hours | Yes |
| *Ex 29#* | 1.6 | 97.6 | 0.4 | 0.4 | 0 | Yes | Yes | <3 hours | Yes |

| | | | | | | | | | |
|---|---|---|---|---|---|---|---|---|---|
| *Hydrophilic # - Is a comparative Example as there is no water. | | | | | | | | | |

It is inferred from the above table that to achieve hydrophobicity in less than 3 hours, water miscible solvent should be present in the composition in a concentration according to the invention.

### Example 8: Effect of the type of silane on hydrophobicity, film strength and stability

In this example, the types of silica according to the invention are compared.

| *Set* | *Silica* | | *Sol vent wt%* | *PDM S wt%* | *Amine silane wt%* | *Water wt%* | *Hydro phobi city [sliding angle of 5° on tile]* | *Film Strength* | *Time required to achieve hydro phobicity (hour)* | *Sta bility* |
|---|---|---|---|---|---|---|---|---|---|---|
| | *Type* | *wt%* | | | | | | | | |
| *Ex 30* | Hydrophilic | 1.6 | 10 | 0.4 | 0.4 | 87.6 | Yes | Yes | <3 hours | Yes |
| *Ex 31* | Hydrophobic | 1.6 | 10 | 0.4 | 0.4 | 87.6 | Yes | Yes | <3 hours | Yes |

It is apparent from the above table that both hydrophilic and hydrophobic silica are equally good in providing a composition which is stable and renders to a surface a protective layer with good film strength and hydrophobicity which is achieved in less than 3 hours.

### Example 9: Antimicrobial effect of the composition on addition of antimicrobial actives

The formulations as in the below table were evaluated using the standard European suspension test EN 1276 in order to determine its immediate antimicrobial efficacy. This test involved testing standard test organisms (*Staphylococcus aureus* ATCC 6538, *Pseudomonas aeruginosa* ATCC 15442) in presence of low and high soil conditions for a contact time of five minutes. Post neutralization in a suitable diluent (D/E neutralizing broth) the number of survivors were determined. The anti adherence benefit (long term benefit) of the formulation was determined using an assay specially designed for the purpose. In this method, formulation coated and uncoated ceramic tile surfaces were challenged with bacterial suspension followed by repeated washings. The number of bacteria adhered to these surfaces were determined by swabbing the tile surfaces and conventional enumeration method.

| *Set* | *Silica* wt%* | *Solvent wt%* | *PDMS wt%* | *Amine- functional silane wt%* | *Antimicrobial actives* | *Water wt%* |
|---|---|---|---|---|---|---|
| *Comp Q* | 1.6 | 10 | 0.4 | 0.4 | 0 | 87.6 |
| *Ex 32* | 1.6 | 10 | 0.4 | 0.4 | 0.5% +0.5% (Menthol + 2-PnP) | 87.6 |
| *Ex 33* | 1.6 | 10 | 0.4 | 0.4 | 1% CPC-Silica | 87.6 |

| | | | | | | |
|---|---|---|---|---|---|---|
| *Hydrophilic | | | | | | |

### Results:

| *Set* | *Hydrophobi city [sliding angle of 5° on tile]* | *EN 1276* | *Log adherence of bacteria* | | | *Anti- adherence benefit* |
|---|---|---|---|---|---|---|
| | | | *S. aureus ATCC 6538* | *P. aerugi nosa ATCC 15442* | *E. coli ATCC 10536* | |
| *Comp Q* | Yes | No | 2.3 | 1.83 | 2.54 | Yes |
| *Ex 32* | Yes | Yes | 1.27 | 1.75 | 1.44 | Yes |
| *Ex 33* | Yes | Yes | 1.51 | 1.49 | 1.19 | Yes |

The base formulation (Comp Q) on its own did not exhibit any antimicrobial efficacy in terms of hygiene benefit. Addition of antimicrobial actives enabled the base formulation to exhibit antimicrobial efficacy (Ex 32 and Ex 33). This addition of antimicrobial actives however did not hamper the hydrophobic benefit offered by the base formulation and also provided anti bacterial adherence benefit as determined by the adherence assay.

### Conclusion:

A combination of both the base formulation along with the antimicrobial active provided hygiene benefit as well as the anti bacterial adherence benefit which thus avoided germ build up over a period of time.

## Claims

1. A hard surface treatment composition comprising
a 1 to 4% by weight of a silica;
b 5 to 50% by weight of a water miscible solvent;
c 0.3 to 0.9% by weight of an amine-functional silane of the formula RSi(OR')₃; wherein,
R is an alkyl chain having 3 to 6 carbon atoms with one amine groups;
R' is H or an alkyl chain having 1 to 5 carbon atoms;
d 0.2 to 4.5% by weight of a polydimethylsiloxane having a viscosity between 25 to 500 cSt (25°C and 4s⁻¹) wherein the polydimethylsiloxane has a functional group selected from hydrogen, hydroxyl and epoxy group; and
e water.

2. A hard surface treatment composition according to claim 1 wherein the composition comprises 45 to 90% by weight of water.

3. A hard surface treatment composition according to claim 1 or 2 wherein the silica is hydrophilic silica or hydrophobically modified silica.

4. A hard surface treatment composition according to claim 3 wherein the hydrophobically modified silica is modified with a silane or cationic surfactant.

5. A hard surface treatment composition according to any one of the preceding claims wherein the polydimethylsiloxane has a viscosity between 25 to 200 cSt (25°C and 4s⁻¹).

6. A hard surface treatment composition according to any one of the preceding claims wherein the silica has a particles size between 7 to 20 nm.

7. A hard surface treatment composition according to any one of the preceding claims wherein R is an alkyl chain having 3 carbon atoms with one amine groups.

8. A hard surface treatment composition according to any one of the preceding claims wherein the amine-functional silane is (3-aminopropyl)triethoxysilane or 3-aminopropyl(diethoxy)methylsilane.

9. A method for rendering a surface hydrophobic comprising the steps in sequence of
a applying the composition according to claims 1 to 8 onto a surface; and
b allowing the surface to dry.

10. Use of the composition according to claims 1 to 8 for rendering a surface hydrophobic.

## Patentansprüche

1. Zusammensetzung zur Behandlung einer harten Oberfläche, umfassend
a 1-4 Gewichts-% eines Siliciumdioxids,
b 5-50 Gewichts-% eines wassermischbaren Lösemittels,
c 0,3 bis 0,9 Gewichts-% eines Amin-funktionellen Silans der Formel RSi(OR')₃, worin
R eine Alkylkette ist, die 3 bis 6 Kohlenstoffatome mit einer Amin-Gruppe aufweist,
R' H oder eine Alkylkette, die 1 bis 5 Kohlenstoffatome aufweist, ist,
d 0,2 bis 4,5 Gewichts-% eines Polydimethylsiloxans, das eine Viskosität zwischen 25 und 500 cSt (25°C und 4 s⁻¹) aufweist, wobei das Polydimethylsiloxan eine funktionelle Gruppe aufweist, die unter Wasserstoff, Hydroxy- und Epoxy-Gruppe ausgewählt ist, und
e Wasser.

2. Zusammensetzung zur Behandlung einer harten Oberfläche nach Anspruch 1, wobei die Zusammensetzung 45 bis 90 Gewichts-% Wasser umfasst.

3. Zusammensetzung zur Behandlung einer harten Oberfläche nach Anspruch 1 oder 2, wobei das Siliciumdioxid hydrophiles Siliciumdioxid oder hydrophob modifiziertes Siliciumdioxid ist.

4. Zusammensetzung zur Behandlung einer harten Oberfläche nach Anspruch 3, wobei das hydrophob modifizierte Siliciumdioxid mit einem Silan oder kationischem Tensid modifiziert ist.

5. Zusammensetzung zur Behandlung einer harten Oberfläche nach irgendeinem der vorhergehenden Ansprüche, wobei das Polydimethylsiloxan eine Viskosität zwischen 25 und 200 cSt (25°C und 4 s⁻¹) aufweist.

6. Zusammensetzung zur Behandlung einer harten Oberfläche nach irgendeinem der vorhergehenden Ansprüche, wobei das Siliciumdioxid eine Partikelgröße zwischen 7 und 20 nm aufweist.

7. Zusammensetzung zur Behandlung einer harten Oberfläche nach irgendeinem der vorhergehenden Ansprüche, wobei R eine Alkylkette ist, die 3 Kohlenstoffatome mit einer Amin-Gruppe aufweist.

8. Zusammensetzung zur Behandlung einer harten Oberfläche nach irgendeinem der vorhergehenden Ansprüche, wobei das Amin-funktionelle Silan (3-Aminopropyl)triethoxysilan oder 3-Aminopropyl(diethoxy)methylsilan ist.

9. Verfahren zum Hydrophobieren einer Oberfläche, umfassend die Schritte in der Folge:
a Auftragen der Zusammensetzung nach den Ansprüchen 1 bis 8 auf eine Oberfläche und
b Trocknenlassen der Oberfläche.

10. Verwendung der Zusammensetzung nach den Ansprüchen 1 bis 8, um eine Oberfläche zu hydrophobieren.

## Revendications

1. Composition de traitement de surface dure comprenant
a 1 à 4 % en masse d'une silice ;
b 5 à 50 % en masse d'un solvant miscible à l'eau ;
c 0,3 à 0,9 % en masse d'un silane amine-fonctionnel de la formule RSi(OR')₃ ; dans laquelle,
R est une chaîne alkyle ayant de 3 à 6 atomes de carbone avec un groupe amine ;
R' est H ou une chaîne alkyle ayant de 1 à 5 atomes de carbone ;
d 0,2 à 4,5 % en masse d'un polydiméthylsiloxane ayant une viscosité de 25 à 500 cSt (25°C et 4 s⁻¹) dans laquelle le polydiméthylsiloxane présente un groupe fonctionnel choisi parmi l'hydrogène, un groupe hydroxyle et époxy ; et
e de l'eau.

2. Composition de traitement de surface dure selon la revendication 1, dans laquelle la composition comprend de 45 à 90 % en masse d'eau.

3. Composition de traitement de surface dure selon la revendication 1 ou 2, dans laquelle la silice est de la silice hydrophile ou de la silice hydrophobiquement modifiée.

4. Composition de traitement de surface dure selon la revendication 3, dans laquelle la silice hydrophobiquement modifiée est modifiée avec un silane ou tensioactif cationique.

5. Composition de traitement de surface dure selon l'une quelconque des revendications précédentes, dans laquelle le polydiméthylsiloxane présente une viscosité de 25 à 200 cSt (25°C et 4 s⁻¹).

6. Composition de traitement de surface dure selon l'une quelconque des revendications précédentes, dans laquelle la silice présente une taille de particule de 7 à 20 nm.

7. Composition de traitement de surface dure selon l'une quelconque des revendications précédentes, dans laquelle R est une chaîne alkyle ayant 3 atomes de carbone avec un groupe amine.

8. Composition de traitement de surface dure selon l'une quelconque des revendications précédentes, dans laquelle le silane amine-fonctionnel est le (3-aminopropyl)triéthoxysilane ou le 3-aminopropyl-(diéthoxy)méthylsilane.

9. Procédé pour rendre une surface hydrophobe comprenant les étapes successives de
a application de la composition selon les revendications 1 à 8 sur une surface ; et
b laisser la surface sécher.

10. Utilisation de la composition selon les revendications 1 à 8 pour rendre une surface hydrophobe.
